# EUROPEAN PATENT APPLICATION

(11) **EP 2 107 229 A1**
(43) Date of publication of application: **07.10.2009**
(21) Application number: 08703818.8
(22) Date of filing: 24.01.2008
(51) Int. Cl.: F02D 21/08, F02M 25/07

(54) **INTERNAL COMBUSTION ENGINE APPARATUS, ITS CONTROL METHOD, AND VEHICLE**

(30) Priority: 25.01.2007 JP 2007015333
(71) Applicant: Toyota Jidosha Kabushiki Kaisha, Toyota-shi Aichi 471-8571 (JP)
(72) Inventor: KOJIMA, Masakiyo, Toyota-shi Aichi 471-8571 (JP)
(74) Representative: TBK-Patent
(86) International application number: PCT/JP2008/050991
(87) International publication number: WO 2008/090957

(57) **Abstract**

Even under satisfaction of an EGR condition during operation of an engine (step S110), when it is determined that the cooling power of a cooling system is less than a preset reference power, based on a cooling water temperature Tw and an outside air temperature Tout (step S130), an EGR valve is controlled to prohibit circulation of exhaust into a gas inlet line (steps S120 and S160). The reference power is set as a criterion of assuring a minimum required power for cooling down the engine even when the EGR is performed during the operation of the engine. This arrangement effectively prevents a decrease in cooling power of the cooling system. When it is determined that the cooling power of the cooling system is not less than the preset reference power (step S130), the EGR valve is controlled to allow circulation of the exhaust into the gas inlet line with a target EGR amount R* calculated from an intake air amount Qa (steps S140 to S160). This arrangement ensures the appropriate operation of the engine.

## Description

### Technical Field

The present invention relates to an internal combustion engine system, a control method of the internal combustion engine system, and a vehicle.

### Background Art

A proposed structure of an internal combustion engine system includes an engine and an EGR system of circulating exhaust of the engine into a gas inlet line (see, for example, Patent Document 1). In the state of operation of the engine in a preset high load range, this proposed internal combustion engine system introduces the exhaust into a first passage equipped with an EGR valve and opens an ON-OFF valve located in a second bypass pathway for introduction of the exhaust, so as to assure circulation of a large amount of the exhaust in the high load range of the engine.

### Patent Document 1: Japanese Patent Laid-Open No. H09-228902

### Disclosure of the Invention

In this prior art internal combustion engine system, EGR causes circulation of hot exhaust and unexpectedly increases the temperature of cooling water. This may not ensure the cooling power expected for an engine cooling system. Especially the EGR during operation of the engine in the high load range causes circulation of a large amount of hot exhaust and may significantly lower the cooling power of the engine cooling system.

In the internal combustion engine system, the control method of the internal combustion engine system and the vehicle, there would thus be a demand for preventing a decrease in cooling power of a cooling system.

The present invention accomplishes at least part of the demands mentioned above and the other relevant demands by the following configurations applied to the internal combustion engine system, the control method of the internal combustion engine system, and the vehicle.

According to one aspect, the invention is directed to an internal combustion engine system including: an internal combustion engine; an exhaust circulation structure configured to perform exhaust circulation, which circulates an exhaust of the internal combustion engine into a gas inlet line of the internal combustion engine; a cooling system configured to cool down the internal combustion engine and the exhaust circulation structure; a cooling power-reflecting physical quantity detector configured to detect a physical quantity reflecting a cooling power of the cooling system as a cooling power-reflecting physical quantity; a decision module configured to determine whether the cooling power of the cooling system is not less than a preset reference power, based on the detected cooling power-reflecting physical quantity; and a controller configured to, upon satisfaction of a predetermined condition for the exhaust circulation, when the decision module determines that the cooling power of the cooling system is not less than the preset reference power, control the internal combustion engine and the exhaust circulation structure to drive the internal combustion engine with cooling by the cooling system and to allow the exhaust circulation, and when the decision module determines that the cooling power of the cooling system is less than the preset reference power, control the internal combustion engine and the exhaust circulation structure to drive the internal combustion engine with cooling by the cooling system and to prohibit the exhaust circulation.

Upon satisfaction of the predetermined condition for the exhaust circulation during operation of the internal combustion engine, the internal combustion engine system according to this aspect of the invention determines whether the cooling power of the cooling system is not less than the preset reference power, based on the physical quantity reflecting the cooling power of the cooling system given as the cooling power-reflecting physical quantity. Upon determination that the cooling power of the cooling system is not less than the preset reference power, the internal combustion engine system controls the internal combustion engine and the exhaust circulation structure to drive the internal combustion engine with cooling by the cooling system and to allow the exhaust circulation. Upon determination that the cooling power of the cooling system is less than the preset reference power, the internal combustion engine system controls the internal combustion engine and the exhaust circulation structure to drive the internal combustion engine with cooling by the cooling system and to prohibit the exhaust circulation. The exhaust circulation is prohibited at the cooling power level of the cooling system of less than the preset reference power. This arrangement effectively prevents a decrease in cooling power of the cooling system. The exhaust circulation is allowed at the cooling power level of the cooling system of not less than the preset reference power. This arrangement controls generation of nitrogen oxides (NOx) and ensures appropriate operation of the internal combustion engine.

In the internal combustion engine system according to the above aspect of the invention, the cooling power-reflecting physical quantity includes at least one of a cooling water temperature of the cooling system, an outside air temperature, a vehicle speed, and an intake air amount of the internal combustion engine. In one preferable application of the internal combustion engine system, the decision module determines that the cooling power of the cooling system is not less than the preset reference power upon satisfaction of a condition including at least one of a condition that the cooling water temperature of the cooling system is not higher than a first temperature, a condition that the outside air temperature is not higher than a second temperature, a condition that the vehicle speed is higher than a predetermined reference speed, and a condition that an accumulated value of the intake air amount of the internal combustion engine in a predetermined time period is not greater than a preset amount. By such a configuration, the cooling power level of the cooling system is determinable, based on the temperature of cooling water of the cooling system, the outside air temperature, the vehicle speed, and the intake air amount of the internal combustion engine.

In the internal combustion engine system according to the above aspect of the invention, upon satisfaction of the predetermined condition in driving the internal combustion engine in a preset high load range, the controller controls the internal combustion engine to be driven in the preset high load range and controls the exhaust circulation structure according to a result of the determination by the decision module. In the state of the operation of the internal combustion engine in the preset high load range, the exhaust circulation is not allowed when the cooling power of the cooling system is less than the preset reference power. This arrangement effectively prevents a decrease in cooling power of the cooling system.

In the internal combustion engine system according to the above aspect of the invention, upon determination that the cooling power of the cooling system is not less than the preset reference power by the decision module, the controller controls the exhaust circulation structure to perform the exhaust circulation with a circulation amount decreasing with a decrease in cooling power of the cooling system toward the preset reference power. This arrangement enables performance of the exhaust circulation while preventing a decrease in cooling power of the cooling system.

According to one aspect, the invention is directed to a vehicle equipped with the internal combustion engine system described above and driven with output power of the internal combustion engine. The internal combustion engine system including: an internal combustion engine; an exhaust circulation structure configured to perform exhaust circulation, which circulates an exhaust of the internal combustion engine into a gas inlet line of the internal combustion engine; a cooling system configured to cool down the internal combustion engine and the exhaust circulation structure; a cooling power-reflecting physical quantity detector configured to detect a physical quantity reflecting a cooling power of the cooling system as a cooling power-reflecting physical quantity; a decision module configured to determine whether the cooling power of the cooling system is not less than a preset reference power, based on the detected cooling power-reflecting physical quantity; and a controller configured to, upon satisfaction of a predetermined condition for the exhaust circulation, when the decision module determines that the cooling power of the cooling system is less than the preset reference power, control the internal combustion engine and the exhaust circulation structure to drive the internal combustion engine with cooling by the cooling system and to prohibit the exhaust circulation, and when the decision module determines that the cooling power of the cooling system is not less than the preset reference power, control the internal combustion engine and the exhaust circulation structure to drive the internal combustion engine with cooling by the cooling system and to allow the exhaust circulation

The vehicle according to another aspect of the invention is equipped with the internal combustion engine system having any of the arrangements described above. The vehicle accordingly has the similar effects and advantages to those of the internal combustion engine system of the invention explained above. For example, the vehicle effectively prevents a decrease in cooling power of the cooling system. The cooling power level of the cooling system is determinable, based on the temperature of cooling water of the cooling system, the outside air temperature, the vehicle speed, and the intake air amount of the internal combustion engine. The exhaust circulation can be performed with preventing a decrease in cooling power of the cooling system.

According to the present invention, a control method of an internal combustion engine system includes the internal combustion engine system having: an internal combustion engine; an exhaust circulation structure configured to perform exhaust circulation, which circulates an exhaust of the internal combustion engine into a gas inlet line of the internal combustion engine; and a cooling system configured to cool down the internal combustion engine and the exhaust circulation structure; upon satisfaction of a predetermined condition for the exhaust circulation, the control method determining whether a cooling power of the cooling system is not less than a preset reference power, based on a physical quantity reflecting the cooling power of the cooling system given as a cooling power-reflecting physical quantity, upon determination that the cooling power of the cooling system is not less than the preset reference power, the control method controlling the internal combustion engine and the exhaust circulation structure to drive the internal combustion engine with cooling by the cooling system and to allow the exhaust circulation, upon determination that the cooling power of the cooling system is less than the preset reference power, the control method controlling the internal combustion engine and the exhaust circulation structure to drive the internal combustion engine with cooling by the cooling system and to prohibit the exhaust circulation.

Upon satisfaction of the predetermined condition for the exhaust circulation during operation of the internal combustion engine, the control method of internal combustion engine system according to this aspect of the invention determines whether the cooling power of the cooling system is not less than the preset reference power, based on the physical quantity reflecting the cooling power of the cooling system given as the cooling power-reflecting physical quantity. Upon determination that the cooling power of the cooling system is not less than the preset reference power, the internal combustion engine system controls the internal combustion engine and the exhaust circulation structure to drive the internal combustion engine with cooling by the cooling system and to allow the exhaust circulation. Upon determination that the cooling power of the cooling system is less than the preset reference power, the internal combustion engine system controls the internal combustion engine and the exhaust circulation structure to drive the internal combustion engine with cooling by the cooling system and to prohibit the exhaust circulation. The exhaust circulation is prohibited at the cooling power level of the cooling system of less than the preset reference power. This arrangement effectively prevents a decrease in cooling power of the cooling system. The exhaust circulation is allowed at the cooling power level of the cooling system of not less than the preset reference power. This arrangement controls generation of nitrogen oxides (NOx) and ensures appropriate operation of the internal combustion engine.

In the control method of the internal combustion engine system according to the above aspect of the invention, the cooling power-reflecting physical quantity includes at least one of a cooling water temperature of the cooling system, an outside air temperature, a vehicle speed, and an intake air amount of the internal combustion engine. In one preferable application of the control method of the internal combustion engine system, the control method determining that the cooling power of the cooling system is not less than the preset reference power upon satisfaction of a condition including at least one of a condition that the cooling water temperature of the cooling system is not higher than a first temperature, a condition that the outside air temperature is not higher than a second temperature, a condition that the vehicle speed is higher than a predetermined reference speed, and a condition that an accumulated value of the intake air amount of the internal combustion engine in a predetermined time period is not greater than a preset amount. By such a configuration, the cooling power level of the cooling system is determinable, based on the temperature of cooling water of the cooling system, the outside air temperature, the vehicle speed, and the intake air amount of the internal combustion engine.

### Brief Description of the Drawings

Fig. 1 schematically illustrates the configuration of an automobile 20 in one embodiment of the invention;
Fig. 2 is a flowchart showing an engine drive control routine executed by an electronic control unit 70 in the embodiment;
Fig. 3 shows one example of an EGR introduction area identification map;
Fig. 4 shows one example of a power level identification map;
Fig. 5 is a flowchart showing a modified engine drive control routine executed by the electronic control unit 70 in one modified example;
Fig. 6 shows one example of a high load drive identification map;
Fig. 7 is a flowchart showing another modified engine drive control routine executed by the electronic control unit 70 in another modified example;
Fig. 8 shows one example of a coefficient setting map; and
Fig. 9 schematically illustrates the configuration of a hybrid vehicle 120 in one modified example.

### Best Modes of Carrying Out the Invention

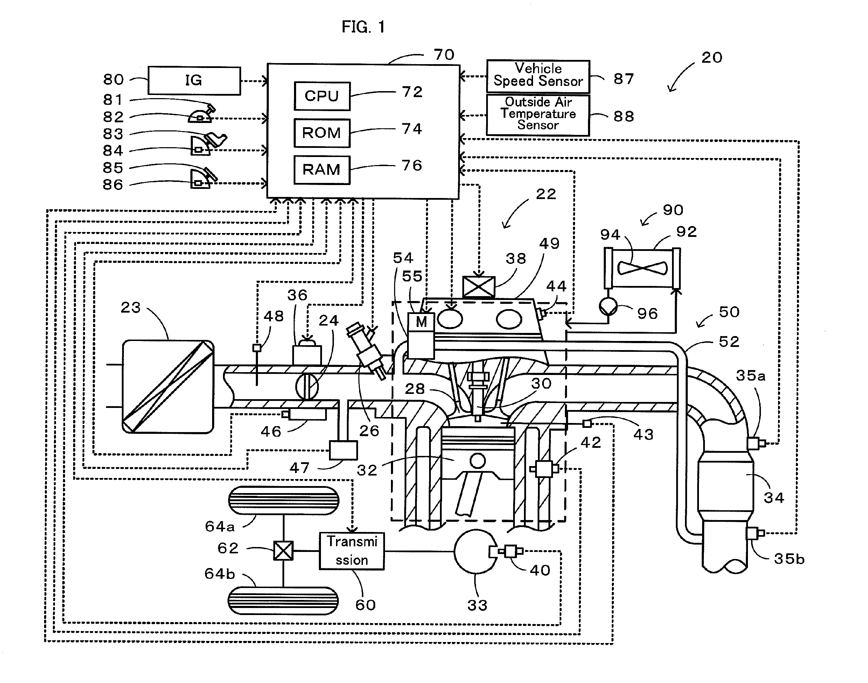

One mode of carrying out the invention is described below as a preferred embodiment with reference to the accompanied drawings. Fig. 1 schematically illustrates the configuration of an automobile 20 equipped with an internal combustion engine system in one embodiment of the invention. As illustrated, the automobile 20 of the embodiment includes an engine 22, a transmission 60 connected with a crankshaft 33 as an output shaft of the engine 22 and with drive wheels 64a and 64b via a differential gear 62, a cooling system 90 configured to cool down the engine 22, and an electronic control unit 70 configured to control the operations of the whole internal combustion engine system.

The engine 22 is constructed as an internal combustion engine designed to consume a hydrocarbon fuel, such as gasoline or light oil, and thereby output power. As illustrated, the air cleaned by an air cleaner 23 and taken in via a throttle valve 24 is mixed with the atomized fuel injected from a fuel injection valve 26 to the air-fuel mixture. The air-fuel mixture is introduced into a combustion chamber by means of an intake valve 28. The introduced air-fuel mixture is ignited with spark made by a spark plug 30 to be explosively combusted. The reciprocating motions of a piston 32 pressed down by the combustion energy are converted into rotational motions of the crankshaft 33. The exhaust from the engine 22 goes through a catalytic converter (three-way catalyst) 34 designed to convert toxic components included in the exhaust, that is, carbon monoxide (CO), hydrocarbons (HC), and nitrogen oxides (NOx), into harmless components and is discharged to the outside air. The purified exhaust is also circulated through an EGR (exhaust gas recirculation) system 50 to the gas intake line. The EGR system 50 includes an EGR tube 52 located in the downstream of the catalytic converter 34 and an EGR valve 54 provided on the EGR tube 52. The EGR system 50 regulates the recirculation amount of the exhaust as uncombusted gas and supplies the regulated recirculation amount of the exhaust to the gas intake line. The engine 22 is thus designed to introduce the mixture of the air, the purified exhaust, and the fuel into the combustion chamber.

The cooling system 90 is constructed as a water cooling system of circulating the flow of cooling water in the engine 22. The cooling system 90 includes a radiator 92 located in a front portion of the engine room, a cooling fan 94 attached to the radiator 92, and a water pump 96 arranged to circulate the flow of cooling water. The cooling system 90 circulates the flow of cooling water through a peripheral area of the combustion chamber, the spark plug 30, and the EGR valve 54 (that is, in an area shown by the broken line) to cool down the engine 22 and the EGR system 50.

The electronic control unit 70 is constructed as a microcomputer including a CPU 72, a ROM 74 configured to store processing programs, a RAM 76 configured to temporarily store data, and input and output ports (not shown). The electronic control unit 70 receives, via its input port, signals from various sensors designed to measure and detect the operating conditions of the engine 22. The signals input into the electronic control unit 70 include a crank position from a crank position sensor 40 detected as the rotational position of the crankshaft 33, a cooling water temperature Tw from a water temperature sensor 42 measured as the temperature of cooling water in the engine 22, an in-cylinder pressure from a pressure sensor 43 located in the combustion chamber, cam positions from a cam position sensor 44 detected as the rotational positions of camshafts driven to open and close the intake valve 28 and an exhaust valve for gas intake and exhaust into and from the combustion chamber, a throttle position or throttle opening from a throttle valve position sensor 46 detected as the position of the throttle valve 24, an intake air temperature from a temperature sensor 48 located in an intake pipe, an air-fuel ratio from an air fuel ratio sensor 35a, an oxygen signal from an oxygen sensor 35b, and an intake pipe pressure Pi from a vacuum sensor 47 detected as the internal pressure of the intake pipe. The input signals also include an ignition signal from an ignition switch 80, a gearshift position SP or a current setting position of a gearshift lever 81 from a gearshift position sensor 82, an accelerator opening Acc or the driver's depression amount of the accelerator pedal 83 from an accelerator pedal position sensor 84, a brake pedal position BP or the driver' s depression amount of the brake pedal 85 from a brake pedal position sensor 86, a vehicle speed V from a vehicle speed sensor 87, and an outside air temperature Tout from an outside air temperature sensor 88 measured as the ambient temperature of the vehicle. The electronic control unit 70 outputs, via its output port, diverse control signals and driving signals to drive and control the engine 22. The signals output from the electronic control unit 70 include a driving signal to the fuel injection valve 26, a driving signal to a throttle motor 36 driven to regulate the position of the throttle valve 24, a control signal to an ignition coil 38 integrated with an igniter, a control signal to a variable valve timing mechanism 49 to vary the open and close timings of the intake valve 28, a driving signal to a stepping motor 55 to adjust the opening of the EGR valve 54, and a control signal to the transmission 60.

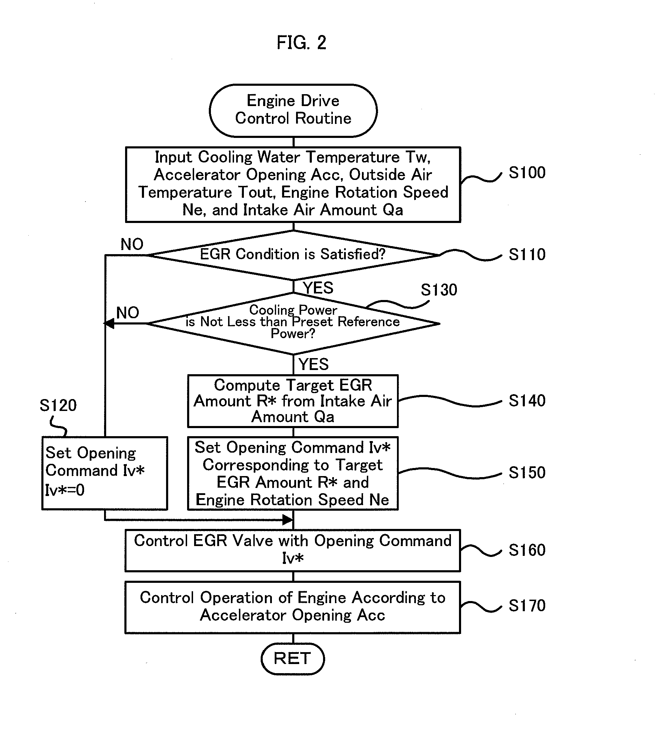

The following describes the operations of the automobile 20 of the embodiment having the configuration discussed above, especially a series of drive control during the operation of the engine 22. Fig. 2 is a flowchart showing an engine drive control routine executed by the electronic control unit 70. The engine drive control routine is performed repeatedly at preset time intervals (for example, at every several msec).

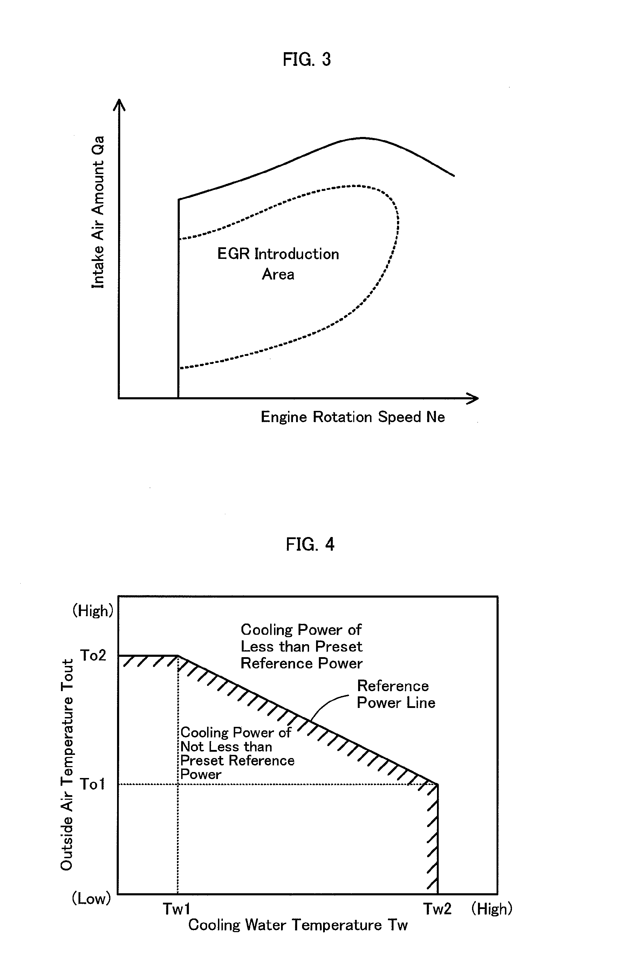

In the engine drive control routine, the CPU 72 of the electronic control unit 70 first inputs various data required for control, for example, the cooling water temperature Tw from the water temperature sensor 42, the accelerator opening Acc from the accelerator pedal position sensor 84, the outside air temperature Tout from the outside air temperature sensor 88, a rotation speed Ne of the engine 22, and an intake air amount Qa as a load of the engine 22 (step S100). The CPU 72 determines whether an EGR condition is satisfied to allow the EGR of circulating the exhaust into the gas inlet line, based on the input cooling water temperature Tw, the input rotation speed Ne of the engine 22, and the input intake air amount Qa (step S110). The rotation speed Ne of the engine 22 is computed from the crank position detected by the crank position sensor 40. The intake air amount Qa is computed from the intake pipe pressure Pi from the vacuum sensor 47 and the rotation speed Ne of the engine 22. In this embodiment, the EGR condition is satisfied when the cooling water temperature Tw is not lower than a preset reference temperature (for example, 65°C or 70°C) and when the drive point of the engine 22 is in an EGR introduction area. The reference temperature shows the state of complete warm-up of the engine 22 and stable combustion. A concrete procedure of determining whether the drive point of the engine 22 is in the EGR introduction area in this embodiment specifies and stores in advance a correlation of the EGR introduction area to the rotation speed Ne of the engine 22 and the intake air amount Qa as an EGR introduction area identification map in the ROM 74 and determines whether the drive point of the engine 22 defined by the given rotation speed Ne of the engine 22 and the given intake air amount Qa is within the EGR introduction area specified in the stored map. One example of the EGR introduction area identification map is shown in Fig. 3. The solid line represents the boundary of a drivable area of the engine 22, and a range surrounded by the solid line and the dotted line represents the EGR introduction area.

Upon failure of the EGR condition at step S110, the CPU 72 sets a value 0' to an opening command Iv* of the EGR valve 54 to prohibit the EGR (step S120) and drives the stepping motor 55 of the EGR valve 54 with the opening command Iv* set equal to 0 (step S160). The CPU 72 then controls the operation of the engine 22 with the input accelerator opening Acc (step S170) and terminates the engine drive control routine of Fig. 2. The operation control of the engine 22 includes intake air amount regulation of adjusting the position of the throttle valve 24 according to the accelerator opening Acc, fuel injection control of regulating the amount of fuel injection to attain the optimum air-fuel ratio according to the intake air amount Qa, and ignition control of adjusting the ignition timing to attain the optimum fuel efficiency.

Upon satisfaction of the EGR condition at step S110, on the other hand, the CPU 72 subsequently determines whether the cooling power of the cooling system 90 is not less than a preset reference power, based on the input cooling water temperature Tw and the input outside air temperature Tout (step S130). The reference power is set as a criterion of assuring a minimum required power for cooling down the engine 22 even when the EGR is performed during the operation of the engine 22 in any high-rotation speed, high-load range in the EGR introduction area. A concrete procedure of determining whether the cooling power of the cooling system 90 is not less than the preset reference power in this embodiment experimentally or otherwise specifies and stores a correlation of a reference power line to the cooling water temperature Tw and the outside air temperature Tout as a power level identification map in the ROM 74. The reference power line is defined by threshold values of the cooling water temperature Tw and the outside air temperature Tout and determines the boundary where the cooling power of the cooling system 90 is not less than the preset reference power. When both the given cooling water temperature Tw and the given outside air temperature Tout are not higher than the threshold values of these temperatures Tw and Tout specified by the reference power line, it is determined that the cooling power of the cooling system 90 is not less than the preset reference power. One example of the power level identification map is shown in Fig. 4. The reference power line consists of three straight lines. The first straight line shows the threshold value set to a second outside air temperature To2 (for example, 60°C or 70°C) at the cooling water temperature Tw of lower than a first water temperature Tw1 (for example, 90°C or 100°C). The third straight line shows the threshold value set to a first outside air temperature To1 (for example, 20°C or 30°C) lower than the second outside air temperature To2 at a second water temperature Tw2 (for example, 110°C or 120°C) higher than the first water temperature Tw1. The second straight line shows the threshold value of the outside air temperature Tout decreasing from the second outside air temperature To2 to the first outside air temperature To1 with an increase in cooling water temperature TW in a range of not lower than the first water temperature Tw1 and lower than the second water temperature Tw2.

Upon determination that the cooling power of the cooling system 90 is not less than the preset reference power at step S130, the CPU 72 computes a target EGR amount R* as a target flow rate of the circulated exhaust from the input intake air amount Qa (step S140) and sets the opening command Iv* of the EGR valve 54 based on the computed target EGR amount R* and the rotation speed Ne of the engine 22 (step S150). The CPU 72 controls the EGR valve 54 with the set opening command Iv* (step S160) and controls the operation of the engine 22 according to the input accelerator opening Acc (step S170). The engine drive control routine is then terminated. The target EGR amount R* is computable from the intake air amount Qa to make an EGR ratio (R*/(Qa+R*)) equal to a predetermined ratio (for example, 5% or 10%). A concrete procedure of setting the opening command IV* of the EGR valve 54 in this embodiment experimentally or otherwise specifies and stores a correlation of the opening command Iv* to the target EGR amount R* and the rotation speed Ne of the engine 22 as an opening command setting map in the ROM 74 and reads the opening command Iv* of the EGR valve 54 corresponding to the given target EGR amount R* and the given rotation speed Ne of the engine 22 from the opening command setting map. The EGR is allowed upon satisfaction of the EGR condition and determination that the cooling power of the cooling system 90 is not less than the preset reference power. The EGR enables recombustion of hydrocarbons (HC) included in the uncombusted exhaust gas to improve the fuel efficiency, while preventing generation of high-concentration nitrogen oxides (NOx) to ensure appropriate operation of the engine 22.

Upon determination that the cooling power of the cooling system 90 is less than the preset reference power at step S130, on the other hand, the CPU 72 controls the EGR valve 54 with the opening command Iv* set to 0 and controls the operation of the engine 22 according to the input accelerator opening Acc (steps S120, S160, and S170). The engine drive control routine is then terminated. Even when the EGR condition is satisfied, the EGR is not allowed in the case of determination that the cooling power of the cooling system 90 is less than the preset reference power. This arrangement prohibits recirculation of the hot exhaust as the heavy cooling load and thereby desirably prevents a decrease in cooling power of the cooling system 90. The permission or prohibition of the EGR is determined based on the reference power used as the criterion of assuring the minimum required power for cooling down the engine 22 even when the EGR is performed during the operation of the engine 22 in any high-rotation speed, high-load range in the EGR introduction area. Prohibition of the EGR at the cooling power level of the cooling system 90 of less than the preset reference power enables the cooling system 90 to keep the minimum required cooling power for cooling down the engine 22.

In the automobile 20 of the embodiment described above, when the cooling power of the cooling system 90 is less than the preset reference power, the EGR is prohibited even under the EGR condition. The prohibition of the EGR effectively prevents a decrease in cooling power of the cooling system 90. The EGR is allowed upon satisfaction of the EGR condition and determination that the cooling power of the cooling system 90 is not less than the preset reference power. Such performance of the EGR ensures appropriate operation of the engine 22. The level of the cooling power of the cooling system 90 is determinable according to the cooling water temperature Tw and the outside air temperature Tout.

In the automobile 20 of the embodiment, the cooling water temperature Tw of not lower than the preset reference temperature and the drive point of the engine 22 in the EGR introduction area satisfy the EGR condition. Only the drive point of the engine 22 in the EGR introduction area may, however, satisfy the EGR condition, regardless of the cooling water temperature Tw. In addition to or in place of the cooling water temperature Tw, another factor may be used to determine satisfaction of the EGR condition.

In the automobile 20 of the embodiment, the level of the cooling power of the cooling system 90 is determined according to the cooling water temperature Tw and the outside air temperature Tout. The level of the cooling power may, however, be determined according to only one of the cooling water temperature Tw and the outside air temperature Tout or according to one or both of the vehicle speed V and the intake air amount Qa in place of or in addition to the cooling water temperature Tw and the outside air temperature Tout. Different physical quantities other than these factors may be used for the determination. In the case of determination according to the vehicle speed V and the intake air amount Qa, it is determined that the cooling power of the cooling system 90 is not less than the preset reference power, when the vehicle speed V is higher than a preset reference vehicle speed or when an accumulated value of the intake air amount Qa in a predetermined time period is not greater than a preset level.

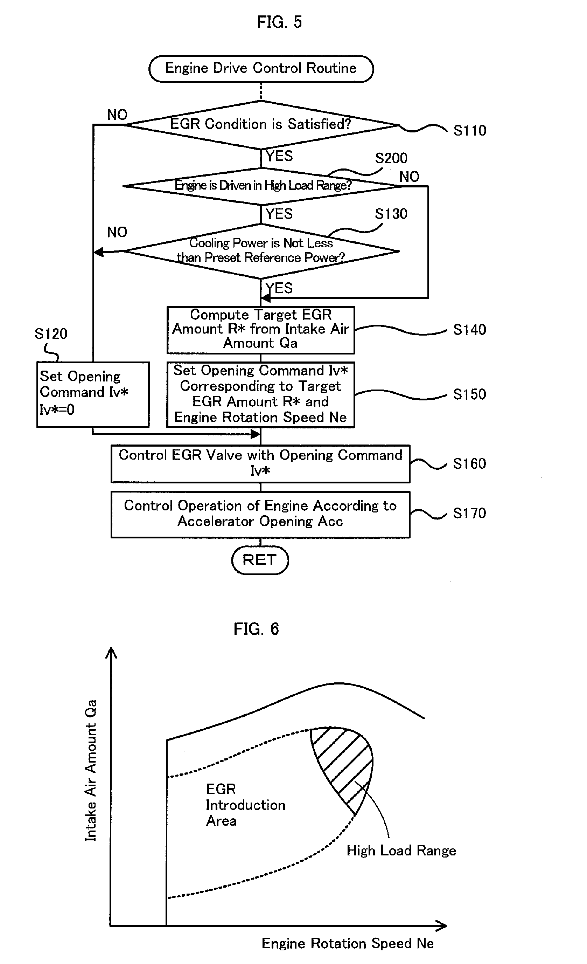

In the automobile 20 of the embodiment, the engine drive control routine determines permission or prohibition of the EGR according to the level determination result of the cooling power of the cooling system 90 under the EGR condition, irrespective of the operation range of the engine 22. One modification may determine permission or prohibition of the EGR according to the level determination result of the cooling power of the cooling system 90 under the EGR condition in the case of the operation of the engine 22 in a high load range. In this case, a modified flow of engine drive control routine shown in the flowchart of Fig. 5 is executed, in place of the engine drive control routine of Fig. 2. The same steps in the routine of Fig. 5 as those in the routine of Fig. 2 are expressed by the same step numbers and are not specifically explained here. Upon satisfaction of the EGR condition (step S110), the modified engine drive control routine determines whether the engine 22 is driven in a preset high load range according to a high load drive identification map shown in Fig. 6 (step S200). The high load drive identification map has the preset high load range specified in the EGR introduction area identification map explained above in the embodiment. Upon determination that the engine 22 is not driven in the preset high load range, the engine drive control routine performs the EGR and controls the operation of the engine 22 without determining the cooling power level of the cooling system 90 (steps S140 to S170). Upon determination that the engine 22 is driven in the preset high load range, on the other hand, permission or prohibition of the EGR is determined according to the level determination result of the cooling power of the cooling system 90 (steps S130 and S120). The engine drive control routine then performs the EGR and controls the operation of the engine 22 (steps S140 to S170). In the state of the operation of the engine 22 in the preset high load range, the EGR is not allowed when the cooling power of the cooling system 90 is less than the preset reference power. This arrangement effectively prevents a decrease in cooling power of the cooling system 90.

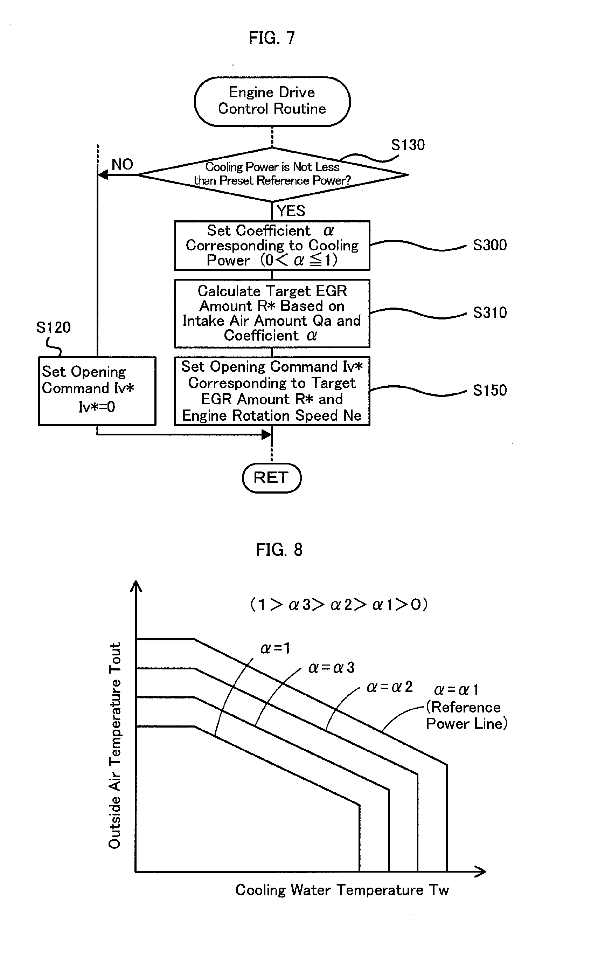

In the automobile 20 of the embodiment, upon determination that the cooling power of the cooling system 90 is not less than the preset reference power, the engine drive routine computes the target EGR amount R* from the intake air amount Qa to make the EGR ratio equal to the predetermined ratio and sets the opening command Iv* of the EGR valve 54 based on the computed target EGR amount R*. One modification may computes the target EGR amount R* to have a decrease with a decrease in cooling power of the cooling system 90 toward the preset reference power and set the opening command Iv* of the EGR valve 54 based on the computed target EGR amount R*. In this case, a modified flow of engine drive control routine shown in the flowchart of Fig. 7 is executed, in place of the engine drive control routine of Fig. 2. The same steps in the routine of Fig. 7 as those in the routine of Fig. 2 are expressed by the same step numbers and are not specifically explained here. Upon determination that the cooling power of the cooling system 90 is not less than the preset reference power (step S130), the modified engine drive control routine refers to a coefficient setting map shown in Fig. 8 and sets a positive coefficient α corresponding to the cooling water temperature Tw and the outside air temperature Tout (step S300). The coefficient α is not less than 1 and decreases with a decrease in cooling power of the cooling system 90 toward the preset reference power. The modified engine drive control routine then calculates a tentative target EGR amount from the intake air amount Qa to make the EGR ratio equal to the predetermined ratio and multiplies the calculated tentative target EGR amount by the set coefficient α to calculate the target EGR amount R* (step S310). The opening command Iv* of the EGR valve 54 is then set with the calculated target EGR amount R* (step S150). The coefficient setting map of Fig. 8 is designed to decrease the coefficient α with increases of the cooling water temperature Tw and the outside air temperature Tout toward their threshold values defined by the reference power line. Under the EGR condition with the cooling power level of the cooling system 90 of not less than the preset reference power, this arrangement performs the EGR with controlling the circulation amount of exhaust to the gas inlet line. Namely this arrangement enables performance of the EGR while preventing a decrease in cooling power of the cooling system 90.

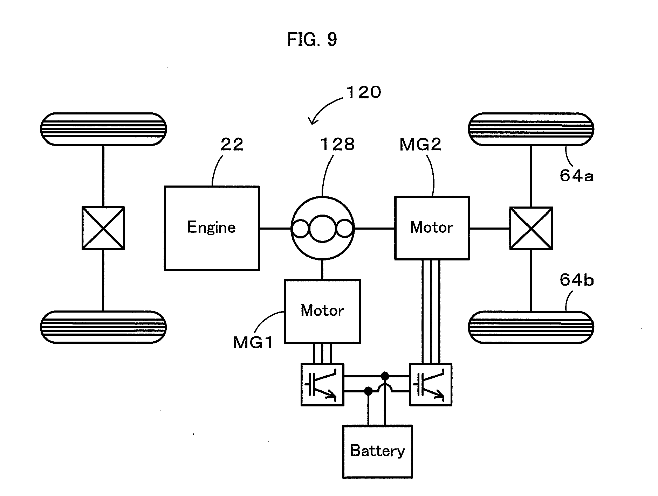

The embodiment regards application of the invention to the automobile 20 driven with the output power of the engine 22. The technique of the invention is applicable to any vehicle drivable with the output power of the engine 22. For example, the invention may be applied to a hybrid vehicle 120 shows in Fig. 9 as one modified example. The hybrid vehicle 120 of Fig. 9 includes an engine 22 and a motor MG1 arranged to output power to drive wheels via a planetary gear mechanism 128 and a motor MG2 arranged to enable power input and power output from and to the drive wheels.

The primary elements in the embodiment are mapped to the primary constituents in the claims of the invention as described below. The engine 22 and the EGR system 50 of the embodiment are respectively equivalent to the ' internal combustion engine' and the 'exhaust circulation structure' of the invention. The cooling system 90 configured to cool down the engine 22 and the EGR system 50 in the embodiment is equivalent to the 'cooling system' of the invention. The water temperature sensor 42 configured to measure the cooling water temperature Tw and the outside air temperature sensor 88 configured to measure the outside air temperature Tout in the embodiment correspond to the 'cooling power-reflecting physical quantity detector' of the invention. The electronic control unit 70 executing the processing of step S130 in the embodiment corresponds to the ' decision module' of the invention. The processing of step S130 determines whether the cooling power of the cooling system 90 is not less than the preset reference power, based on the cooling water temperature Tw and the outside air temperature Tout. The electronic control unit 70 executing the processing of steps S140 to S160 or the processing of steps S120 and S160 and the processing of step S170 in the embodiment corresponds to the 'controller' of the invention. Upon satisfaction of the EGR condition and determination that the cooling power of the cooling system 90 is not less than the preset reference power, the processing of steps S140 to S160 sets the opening command Iv* of the EGR valve 54 to allow the EGR with the target EGR amount R* calculated from the intake air amount Qa and controls the EGR valve 54 with the set opening command Iv*. Upon determination that the cooling power of the cooling system 90 is less than the preset reference power, the processing of steps S120 and S160 sets the opening command Iv* of the EGR valve 54 to 0 to prohibit the EGR and controls the EGR valve 54 with the set opening command Iv*. The processing of step S170 controls the operation of the engine 22 according to the accelerator opening Acc. The above mapping of the primary elements in the embodiment to the primary constituents in the claims of the invention is not restrictive in any sense but is only illustrative for concretely describing the mode of carrying out the invention. Namely the embodiment and its modified example discussed above are to be considered in all aspects as illustrative and not restrictive.

The invention is not restricted to the internal combustion engine system mounted on the automobile but is also actualized by an internal combustion engine system mounted on any of various moving bodies including train vehicles and diversity of other vehicles as well as automobiles and by an internal combustion engine system incorporated in any stationary equipment like construction machinery. Another application of the invention is a control method of the internal combustion engine system.

The embodiment and its modified examples discussed above are to be considered in all aspects as illustrative and not restrictive. There may be many other modifications, changes, and alterations without departing from the scope or spirit of the main characteristics of the present invention.

The present application claims priority from Japanese Patent Application No. 2007-015333 filed on January 25, 2007, the contents of which are hereby incorporated by reference into this application.

### Industrial Applicability

The technique of the invention is preferably applied to the manufacturing industries of internal combustion engine systems and vehicles.

## Claims

1. An internal combustion engine system, comprising:
an internal combustion engine;
an exhaust circulation structure configured to perform exhaust circulation, which circulates an exhaust of the internal combustion engine into a gas inlet line of the internal combustion engine;
a cooling system configured to cool down the internal combustion engine and the exhaust circulation structure;
a cooling power-reflecting physical quantity detector configured to detect a physical quantity reflecting a cooling power of the cooling system as a cooling power-reflecting physical quantity;
a decision module configured to determine whether the cooling power of the cooling system is not less than a preset reference power, based on the detected cooling power-reflecting physical quantity; and
a controller configured to, upon satisfaction of a predetermined condition for the exhaust circulation, when the decision module determines that the cooling power of the cooling system is not less than the preset reference power, control the internal combustion engine and the exhaust circulation structure to drive the internal combustion engine with cooling by the cooling system and to allow the exhaust circulation, and when the decision module determines that the cooling power of the cooling system is less than the preset reference power, control the internal combustion engine and the exhaust circulation structure to drive the internal combustion engine with cooling by the cooling system and to prohibit the exhaust circulation.

2. The internal combustion engine system in accordance with claim 1, wherein the cooling power-reflecting physical quantity includes at least one of a cooling water temperature of the cooling system, an outside air temperature, a vehicle speed, and an intake air amount of the internal combustion engine.

3. The internal combustion engine system in accordance with claim 2, wherein the decision module determines that the cooling power of the cooling system is not less than the preset reference power upon satisfaction of a condition including at least one of a condition that the cooling water temperature of the cooling system is not higher than a first temperature, a condition that the outside air temperature is not higher than a second temperature, a condition that the vehicle speed is higher than a predetermined reference speed, and a condition that an accumulated value of the intake air amount of the internal combustion engine in a predetermined time period is not greater than a preset amount.

4. The internal combustion engine system in accordance with claim 1, wherein upon satisfaction of the predetermined condition in driving the internal combustion engine in a preset high load range, the controller controls the internal combustion engine to be driven in the preset high load range and controls the exhaust circulation structure according to a result of the determination by the decision module.

5. The internal combustion engine system in accordance with claim 1, wherein upon determination that the cooling power of the cooling system is not less than the preset reference power by the decision module, the controller controls the exhaust circulation structure to perform the exhaust circulation with a circulation amount decreasing with a decrease in cooling power of the cooling system toward the preset reference power.

6. A vehicle equipped with the internal combustion engine system in accordance with claim 1 and driven with output power of the internal combustion engine.

7. A control method of an internal combustion engine system, the internal combustion engine system having: an internal combustion engine; an exhaust circulation structure configured to perform exhaust circulation, which circulates an exhaust of the internal combustion engine into a gas inlet line of the internal combustion engine; and a cooling system configured to cool down the internal combustion engine and the exhaust circulation structure;
upon satisfaction of a predetermined condition for the exhaust circulation, the control method determining whether a cooling power of the cooling system is not less than a preset reference power, based on a physical quantity reflecting the cooling power of the cooling system given as a cooling power-reflecting physical quantity,
upon determination that the cooling power of the cooling system is not less than the preset reference power, the control method controlling the internal combustion engine and the exhaust circulation structure to drive the internal combustion engine with cooling by the cooling system and to allow the exhaust circulation,
upon determination that the cooling power of the cooling system is less than the preset reference power, the control method controlling the internal combustion engine and the exhaust circulation structure to drive the internal combustion engine with cooling by the cooling system and to prohibit the exhaust circulation.

8. The control method of the internal combustion engine system in accordance with claim 7, wherein the cooling power-reflecting physical quantity includes at least one of a cooling water temperature of the cooling system, an outside air temperature, a vehicle speed, and an intake air amount of the internal combustion engine.

9. The control method of the internal combustion engine system in accordance with claim 8, the control method determining that the cooling power of the cooling system is not less than the preset reference power upon satisfaction of a condition including at least one of a condition that the cooling water temperature of the cooling system is not higher than a first temperature, a condition that the outside air temperature is not higher than a second temperature, a condition that the vehicle speed is higher than a predetermined reference speed, and a condition that an accumulated value of the intake air amount of the internal combustion engine in a predetermined time period is not greater than a preset amount.
